# EUROPÄISCHE PATENTSCHRIFT

(11) **EP 1 210 176 B1**
(45) Veröffentlichungstag und Bekanntmachung des Hinweises auf die Patenterteilung: **16.03.2005**
(21) Anmeldenummer: 00967636.2
(22) Anmeldetag: 31.08.2000
(51) Int. Cl.: B01J 23/26, B01J 37/02, C08F 4/24

(54) **VERFAHREN ZUM HERSTELLEN VON GETRÄGERTEN CHROMKATALYSATOREN FÜR DIE POLYMERISATION VON OLEFINEN**
METHOD FOR PRODUCING SUPPORTED CHROMIUM CATALYSTS FOR THE POLYMERISATION OF OLEFINS
PROCEDE POUR LA PRODUCTION DE CATALYSEURS SUPPORTES A BASE DE CHROME POUR LA POLYMERISATION DES OLEFINES

(30) Priorität: 09.09.1999 DE 19943167
(43) Veröffentlichungstag der Anmeldung: 05.06.2002
(73) Patentinhaber: Basell Polyolefine GmbH, 50389 Wesseling (DE)
(72) Erfinder: DE LANGE, Paulus, 50389 Wesseling (DE); FUNK, Guido, 67549 Worms (DE); DECKERS, Andreas, 55234 Flomborn (DE); KÖLLE, Peter, 67098 Bad Dürkheim (DE)
(86) Internationale Anmeldenummer: PCT/EP2000/008484
(87) Internationale Veröffentlichungsnummer: WO 2001/017675

(56) Entgegenhaltungen:
- DE-A- 2 540 279
- US-A- 4 364 939
- US-A- 4 967 029
- US-A- 5 037 911

## Beschreibung

Die Erfindung betrifft ein Verfahren zum Herstellen geträgerter Chromkatalysatoren für die Polymerisation von Olefinen.

Unter geträgerten Chromkatalysatoren werden im Rahmen der Erfindung Chromkatalysatoren bezeichnet, wie sie zur Polymerisation von α-Olefinen verwendet werden (vgl. M.P. McDaniel, Adv. Cat. 33, Seiten 47 bis 98 (1985)).

Polymerisationskatalysatoren, die Kieselgel oder modifiziertes Kieselgel als Trägermaterial und Chrom als aktive Komponente enthalten, spielen eine wesentliche Rolle für die Herstellung von High-Density-Polyethylen (HD-PE).

Die Bedingungen bei der Herstellung der Träger und der Katalysatoren bestimmen die chemische Zusammensetzung, Porenstruktur, Teilchengröße und Form der Katalysatoren. Vor der Polymerisation werden die Katalysatoren bei hohen Temperaturen unter oxidierenden Bedingungen aktiviert, um Chrom auf der Katalysatoroberfläche zu stabilisieren. Anschließend wird der Katalysator durch Zugabe von Ethen oder von zusätzlichen Reduktionsmitteln reduziert, um die katalytisch aktive Spezies auszubilden, die die Polymerisation katalysiert.

Die Herstellung solcher geträgerter Chromkatalysatoren erfolgt üblicherweise in zwei Stufen. In einem ersten Schritt wird das Trägermaterial zunächst mit einer löslichen Chromverbindung in einem geeigneten Lösungsmittel in Kontakt gebracht. Anschließend wird in einem zweiten Schritt das Gemisch aus Träger und Chromverbindung im Luftstrom oder im Sauerstoffstrom bei hohen Temperaturen, etwa zwischen 300 und 1100°C calciniert. Die Beschaffenheit des Trägermaterials ist von großer Bedeutung.

Geeignete Träger lassen sich gemäß DE-A 25 40 279 herstellen. Dieses Verfahren betrifft die Herstellung eines 10 bis 25 Gew.-% Feststoff (berechnet als SiO₂) enthaltenen Kieselsäure-Hydrogels, dessen Partikel weitgehend kugelförmig sind,
- durch Einbringen einer Natrium- bzw. Calciumwasserglaslösung in einem unter Drall stehenden Strom einer Mineralsäure, sowohl längs als auch tangential zum Strom,
- tropfenförmiges Versprühen des dabei entstehenden Kieselsäure-Hydrosols in ein gasförmiges Medium,
- Erstarrenlassen des Hydrosols in einem gasförmigen Medium zu Hydrogel-Teilchen,
- Waschen der so erhaltenen weitgehend kugelförmigen Hydrogel-Teilchen zum Befreien des Hydrogels von Salzen,
- Extraktion der Hydrogel-Teilchen mit einem Alkohol bis mindestens 60 % des im Hydrogel enthaltenen Wassers entfernt sind,
- Trocknung des erhaltenen Hydrogels bei Temperaturen ≥ 160°C bei Normaldruck unter Verwendung eines inerten Schleppgases bis der Restalkoholgehalt unter 10 % liegt (Xerogel-Bildung),
- Einstellen der gewünschten Teilchengröße des erhaltenen Xerogels.

Andererseits können die aus DE-A 42 28 883 bekannten Silizium-Aluminium-Phosphat-Träger Anwendung finden.

Die Herstellung der Chromoxidkatalysatoren erfolgt in der Regel gemäß DE-A 25 40 279 oder in einer ähnlichen Art und Weise. Zur Beladung des Katalysatorträgers mit einer Chromverbindung wird das erhaltene Xerogel mittels einer 0,05 bis 15 gew.-%-igen Lösung einer Chromverbindung, die unter den unten genannten Reaktionsbedingungen im wesentlichen in eine Chrom(VI)-Verbindung übergeht, in einem Alkohol, der maximal 20 Gew.-% Wasser enthält, durch Verdampfen des Alkohols mit der gewünschten Menge Chrom beladen und das resultierende Produkt in einem wasserfreien Gasstrom, der mindestens 10 Vol.-% Sauerstoff enthält, auf Temperaturen im Bereich von 300 bis 1100°C über einen Zeitraum von 10 bis 1000 min erhitzt.

Die bekannten geträgerten Chromkatalysatoren weisen eine Reihe von Nachteilen auf Es hat sich gezeigt, dass die Chromverbindung sich vor allen Dingen an den äußeren Bereichen des Katalysatorträgers anlagert, während die inneren Bereiche in weit geringerem Maße benetzt werden. Da aber auch die inneren Bereiche der Katalysatorpartikel an der Katalyse teilhaben, ist eine solche inhomogene Chromverteilung höchst unerwünscht. Im übrigen werden häufig Chrom-Agglomerate beobachtet, die durch die örtlich begrenzte Abscheidung der Chromverbindungen an der Katalysatoroberfläche entstehen.

Es ist Aufgabe der Erfindung, ein Verfahren zum Herstellen eines geträgerten Chromkatalysators anzugeben, der über den Katalysatorträger-Partikelquerschnitt eine gleichmäßigere Chromverteilung aufweist und die Bildung von Chrom-Agglomeraten weitgehend vermeidet.

Die erfindungsgemäße Lösung der Aufgabe geht aus von einem Verfahren zum Herstellen geträgerter Chromkatalysatoren durch Beladen eines Xerogel-Trägers mit Chrom durch
a) Versetzen des Xerogel-Trägers mit einem Volumen einer 0,025 bis 15 gew.-%-igen Lösung einer Chromverbindung oder mit einem Volumen einer 0,025 bis 7,8 Gew.-% Cr enthaltenden Lösung, die bei Erhitzen unter oxi-dierenden Bedingungen auf Temperaturen im Bereich von 300 bis 1100°C über einen Zeitraum von 10 bis 1000 min im wesentlichen in eine Chrom(VI)-Verbindung übergeht, in einem Lösungsmittel, das maximal 20 Gew.-% Wasser enthält, und anschließendes
b) Verdampfen des Lösungsmittels.

Die Erfindung ist dann dadurch gekennzeichnet, dass das Volumen der eingesetzten Chromsalzlösung kleiner ist als 95% des Porenvolumens des Xerogel-Trägers.

Xerogele sind Gele, die ihre Flüssigkeit auf irgendeine Weise (durch Verdampfen, Abpressen oder Absaugen) verloren haben, wobei sich die räumliche Anordnung des Netzes verändert, so dass die Abstände zwischen den Strukturelementen nur noch Dimensionen von Atomabständen besitzen. Xerogel-Träger lassen sich auf Kieselgel-Basis gemäß DE-A 25 40 279 herstellen. Neben Xerogel-Trägern auf Kieselgel-Basis kommen aber auch Xerogel-Träger auf einer Aluminium-Phosphat-Basis oder Xerogel-Träger auf der Basis von Aluminiumoxid-Siliziumoxid-Cogelen oder Aluminium-Silikat-Gelen in Frage (vgl. US-A 2 825 721 oder USA 2 930 789). Bei der Wahl der Xerogel-Träger werden solche mit einem großen Porenvolumen von bis zu 3 ml/g bevorzugt.

Als Lösungsmittel für die Chromverbindung kommen z.B. Alkohole oder C₃-C₅-Alkanone in Frage. C₁-C₄-Alkohole sind bevorzugt, insbesondere Methanol.

Die Einzelheiten der Imprägnierung sind zum Beispiel der DE-A 25 40 279 zu entnehmen. Geeignete Chromverbindungen sind zu Beispiel Chromtrioxid, Chromhydroxid sowie lösliche Salze des dreiwertigen Chroms mit einer organischen oder anorganischen Säure wie Acetat, Oxalat, Sulfat oder Nitrat.

Besonders bevorzugt werden Salze von solchen Säuren eingesetzt, die beim Aktivieren rückstandsfrei im wesentlichen in Chrom(VI) übergehen, wie Chrom(III)nitrat-nona-hydrat. Der Xerogel-Träger wird mit einem Volumen eines Lösungsmittels versetzt, das die Chromverbindung enthält. Das Volumen dieser Chromlösung ist kleiner als das Porenvolumen des Xerogel-Trägers.

Das Porenvolumen des Xerogel-Trägers wird durch das im Rahmen des Ausführungsbeispiels beschriebene Verfahren bestimmt (siehe Tabelle 1). Bevorzugt beträgt das Volumen des Lösungsmittels weniger als 90 %, insbesondere 75 bis 85 %, des Porenvolumens des Xerogel-Trägers.

Anschließend wird der Xerogel-Träger und die Chromlösung (gegebenenfalls unter Zugabe von Fluorierungsmitteln wie ASF, Ammoniumhexafuorosilikat) beispielsweise in einem Doppelkonusmischer gemischt. Das Lösungsmittel und gegebenenfalls das darin enthaltene Wasser werden bei Temperaturen im Bereich von 20 bis 200 °C, bevorzugt von 100 bis 150 °C, und Drücken im Bereich von 1,3 mbar bis 1 bar, bevorzugt von 300 bis 900 mbar, abdestilliert.

Die Aktivierung des Katalysators erfolgt (gegebenenfalls unter Zugabe von Fluorierungsmitteln wie ASF, Ammoniumhexafuorosilikat) unter oxidierenden Bedingungen, z. B. in einem wasserfreien Gasstrom, der mindestens 10 Vol.-% Sauerstoff enthält, vorzugsweise bei Temperaturen im Bereich von 300 bis 1100°C, besonders bevorzugt bei Temperaturen von 500 bis 800°C, über einen Zeitraum von bevorzugt 60 bis 1000 min, besonders bevorzugt von 200 bis 800 min, beispielsweise in einem von Luft durchströmten Wirbelbett.

Das erfindungsgemäße Verfahren führt zu einem Katalysator eines Chromgehalts von 0,1 bis 3 Gew.-%, bevorzugt von 0,7 bis 1,5 Gew.-%, besonders bevorzugt von 0,9 bis 1,2 Gew.-%.

Dieser ist zur Homo- und Copolymerisation ungesättigter Verbindungen geeignet. Bevorzugt werden als ungesättigte Verbindungen Ethen oder C₃- bis C₈-α-Monoolefine eingesetzt.

Es war bisher unbekannt, dass die Menge an Lösungsmittel, in welchem die Chromverbindung aufgelöst wird, die Eigenschaften des geträgerten Chromkatalysators beeinflußt. Bisher wurde mindestens die Menge an Lösungsmittel eingesetzt, die dem Porenvolumen des Trägers entspricht. Der Fachmann erwartet nämlich, dass für eine optimale Chromverteilung alle Poren gefüllt sein müssen. So wurden z.B. in US-A 5 231 066 bimodale Kieselgel-Partikel mit einer Chromlösung imprägniert, deren Volumen ein Vielfaches des Porenvolumens des Trägers betrug Auch in US-A 4 209 603 wurde ein verbesserter geträgerter Chromkatalysator zur Polymerisierung von α-Alkenen offenbart, bei dessen Imprägnierung ein Überschuß von Lösungsmittel eingesetzt wurde.

Bei der Herstellung von getragenen Chromkatalysatoren zum Herstellen von Gleitmitteln wurden Xerogel-Träger auf der Basis von Kieselgel mit Lösungen einer Chromverbindung in Essigsäure imprägniert, deren Volumen dem Porenvolumen des Trägers entsprach (US-A 4 967 029 und WO 95/18782).

Überraschend wurde nun gefunden, dass eine weitere Verringerung des Volumens des Imprägnierungsmittels die Homogenität der Chromverteilung verbessert. Durch Scanning Electron Microscopy (SEM) und Electron Probe Microanalysis (EPMA) wurde nachgewiesen, dass bei Anwendung des erfindungsgemäßen Verfahrens ein größerer Chromanteil im Innern des Xerogel-Träger-Partikels gebunden wird Auf diese Weise wird also eine homogenere Verteilung des Chroms erreicht. Darüber hinaus hat die Reduzierung des Volumens des Imprägnierungsmittels zur völligen Überraschung der Fachwelt zur Folge, dass keine Wandbeläge im Imprägnierkessel und im Trocknungsapparat gebildet werden.

Der nach dem erfindungsgemäßen Verfahren erhältliche geträgerte Chromkatalysator kann zur Polymerisation von Ethen und/oder von C₃-C₁₀-α-Monoolefinen verwendet werden. Aufgrund des verbesserten Herstellungsverfahrens weist der Katalysator eine erhöhte Produktivität auf und fuhrt zu Polymeren mit verbesserten mechanischen Eigenschaften, zum Beispiel erhöhter Spannungsrissbeständigkeit.

Ein weiterer Gegenstand der Erfindung ist ein Verfahren zur Polymerisation von Ethen und/oder von C₃-C₁₀-α-Monoolefinen, in welchem ein erfindungsgemäßer getragener Chromkatalysator als Katalysator zur Anwendung kommt.

Ein weiterer Gegenstand sind Polyethylene, die nach dem vorgenannten Verfahren erhältlich sind.

Die Erfindung wird durch das nachfolgende Ausführungsbeispiel für den Fachmann näher beschrieben.

### Beispiel

10 kg Xerogel-Träger, der gemäß DE 25 40 279 hergestellt worden ist, und 17 l einer 5,4 gew.-%-igen Lösung von Chrom(III)-nitrat-nona-hydrat in Methanol wurden in einen Doppelkonusmischer gefüllt. Unter Rotation des von außen mit Dampf auf 130°C beheizten Mischers wurde dann im Wasserstrahlvakuum das Methanol abdestilliert. Die so gewonnene Vorstufe hatte einen analytisch ermittelten Chromgehalt von rund 0,0002 mol/g. Mittels SEM und EPMA wurde die Verteilung des Chroms bestimmt.

Das resultierende Produkt wurde in einem Fließbett, welches von Luft durchströmt wurde, 6 h auf eine Temperatur von 630°C erhitzt und dann wieder abgekühlt. Ab 140°C wurde das Fließbett von Stickstoff durchspült, um Sauerstoffspuren (die bei der Polymerisation stören) zu beseitigen.

In einem Vergleichsbeispiel wurden 15 kg desselben Xerogel-Trägers (hergestellt gemäß DE 25 40 279) und 40 l einer 4,1 gew.-%-igen Lösung von Chrom(III)-nitrat-nona-hydrat in Methanol in einem Doppelkonusmischer gemischt. Unter Rotation des von außen mit Dampf auf 130°C beheizten Mischers wurde dann im Wasserstrahlvakuum das Methanol abdestilliert. Die so gewonnene Vorstufe hatte ebenfalls einen analytisch ermittelten Chromgehalt von rund 0,0002 mol/g Die Chromverteilung wurde ebenfalls bestimmt. Anschließend wurde der Katalysator so behandelt, wie für den erfindungsgemäßen Katalysator beschrieben.

Der erfindungsgemäße Katalysator und der Vergleichskatalysator wurden zur Polymerisation von Ethen und Hexen in einem 0,2 m³ großen Schleifenreaktor eingesetzt. Die Einstellung der Schmelzfließrate und der Dichte erfolgte über die Reaktortemperatur und die Comonomerkonzentration im Suspensionsmittel. Als Suspensionsmittel diente Isobutan. Der Reaktorinnendruck betrug 39 bar, die Reaktordichte lag bei ca 640 kg/m³. Die Polymerisation wurde kontinuierlich und unter Aufrechterhaltung des Ethylenpartialdrucks durchgeführt. Die Daten sind in den nachfolgenden Tabellen zusammengestellt.

**Tabelle 1**

| Katalysator | Porenvolumen¹(ml/g) | Lösungsmittelmenge² (ml/g) | Cr, außen³wE | Cr, innen³ wE | Cr, a/Cr, i |
|---|---|---|---|---|---|
| Beispiel | 1,8 | 1,7 | 79 | 21 | 3,8 |
| Vergleichsbeispiel | 1,8 | 2,7 | 87 | 13 | 6,7 |

| | | | | | |
|---|---|---|---|---|---|
| ¹Porenvolumen: Der zu prüfende, pulverförmige Stoff wird so lange unter ständiger Durchmischung portionsweise mit Wasser versetzt, bis alle Poren mit Flüssigkeit gesättigt sind, was sich darin äußert, dass das Pulver seine Rieselfähigkeit verliert und anfängt zu klumpen. Das benötigte Flüssigkeitsvolumen pro Gramm Probe entspricht dem Porenvolumen der Probe. Im Rahmen der Erfindung wurde das Porenvolumen wie folgt bestimmt: 5g des zu prüfenden Stoffes wurden in eine trockene Pulverflasche (150 ml) mit Schraubdeckel eingewogen. Aus einer Bürette wurde dest. Wasser portionsweise zugegeben (zunächst 2 ml, später immer weniger), die Flasche wurde mit dem Schraubdeckel verschlossen und durch kräftiges Schütteln der Inhalt gemischt. Dann wurde die Flasche mit einem kräftigen Schlag auf eine Korkplatte gestellt und anschließend umgedreht. Wenn dabei etwa 1/3 der Probe am Boden der Flasche hängen bleibt, sind die Poren gesättigt. Der Wasserverbrauch wurde abgelesen und auf 1 g der Probe umgerechnet. Die Standardabweichung der Porenvolumenmesswerte beträgt ± 0,02 ml/g. | | | | | |
| ²Lösungsmittelmenge: Menge, die für die Imprägnierung eingesetzt wird. | | | | | |
| ³Chromverteilung: Zur mengenmäßigen Analyse der sich im Katalysatorkom befindenden Aktivkomponenten werden die Katalysatorkörner in ein unpolares Harz eingebettet und mit Hilfe einer Fräse durchtrennt. Die Harzkomponente muss so beschaffen sein, dass sie nicht mit den Aktivkomponenten reagiert. Anschließend wird auf dem präparierten Anschliff eine etwa 30 nm dicke amorphe Kohlenstoffschicht durch Bedampfen aufgebracht. Die Darstellung der Elementverteilung im Korn erfolgt mit Hilfe der energiedispersiven Röntgenanalyse. Die auf den Festkörper auftreffenden Elektronen regen in einer Tiefe von 2 bis 3 µm unterhalb des Auftreffpunktes durch Stoßionisation charakteristische Röntgenstrahlung an. Mit einem Detektor kann die vom Festkörper emittierte Röntgenstrahlung energieselektiv detektiert werden. Zur Bestimmung der Elementverteilung wird der Elektronenstrahl zeilenförmig in einem 256 x 256 Punkteraster über die Oberfläche gerührt. Durch eine automatische Probentischfuhrung können eine Vielzahl von Katalysatorkörnern vermessen werden. Die maximale laterale Auflösung für die Elementverteilung beträgt 1 µm. Der Chromgehalt wird in der Mitte des Komquerschnitts und unmittelbar unter der Kornoberfläche bestimmt und in willkürlichen Einheiten (wE) angegeben. | | | | | |

**Tabelle 2**

| Katalysator | Polymerisations -temperatur (°C) | Produktivität¹ (gPE/gKat) | Polymerdichte (g/ml) nach ISO1183 | HLMI²(g/10 min.) ISO1133 | ESCR³ (h) |
|---|---|---|---|---|---|
| Beispiel | 106 | 4900 | 0,9463 | 6,5 | 38 |
| Vergleichsbeispiel | 105 | 4100 | 0,9465 | 6,7 | 25 |

| | | | | | |
|---|---|---|---|---|---|
| ¹Produktivität: Angabe in g Polyethylen pro g Katalysator | | | | | |
| ²HLMI: High Load Melt Index gemäß ISO 1133 | | | | | |
| ³ESCR-Meßmethode: Scheibenförmige Prüfkörper (Durchmesser 40 mm, 2 mm dick, einseitig geritzt mit einer Kerbe von 20 mm Länge und 0,1 mm Tiefe) werden zur Bestimmung der Spannungsrißbeständigkeit bei 80 °C in eine 1% Nekanil-Lösung eingetaucht und mit einem Druck von 3 bar belastet. Gemessen wird die Zeit bis zum Auftreten von Spannungsrissen. | | | | | |

Aus den durchgeführten und wie oben beschriebenen Versuchen zeigt sich, dass der Katalysator eine gleichmäßigere Chromverteilung aufweist, als der Vergleichskatalysator (Chrom, außen /Chrom, innen: 3,8 gegenüber 6,7, siehe Tabelle 1). Bei vergleichbarer Dichte und vergleichbarem Fließverhalten zeigt der erfindungsgemäße Katalysator gegenüber dem Vergleichskatalysator eine um fast 20 % gesteigerte Produktivität und das mit dem erfindungsgemäßen Katalysator hergestellte Polymer eine verbesserte Spannungsrissbeständigkeit.

## Patentansprüche

1. Verfahren zum Herstellen von geträgerten Chromkatalysatoren für die Polymerisation von Olefinen durch Beladen eines Xerogel-Trägers mit Chrom durch
a) Versetzen des Xerogel-Trägers mit einem Volumen einer 0,025 bis 15 gew.-%-igen Lösung einer Chromverbindung oder mit einem Volumen einer 0,025 bis 7,8 Gew.-% Cr enthaltenden Lösung, die bei Erhitzen in einem wasserfreien Gasstrom unter oxidierenden Bedingungen auf Tempe-raturen im Bereich von 300 bis 1100°C über einen Zeitraum von 10 bis 1000 min, im wesentlichen in eine Chrom(VI)-Verbindung übergeht, in einem Lösungsmittel, das maximal 20 Gew.-% Wasser enthält, und anschließendes
b) Verdampfen des Lösungsmittels,
**dadurch gekennzeichnet, dass** das Volumen der eingesetzten Chromsalzlösung kleiner ist als 95 % des Porenvolumens des Xerogel-Trägers.

2. Verfahren nach Anspruch 1, **dadurch gekennzeichnet, dass** das Volumen der Chromsalzlösung kleiner ist als 90 % des Porenvolumens des Xerogel-Trägers.

3. Verfahren nach Anspruch 2, **dadurch gekennzeichnet, dass** das Volumen der Chromsalzlösung 75 bis 85 % des Porenvolumens des Xerogel-Trägers beträgt.

4. Verfahren nach einem der Ansprüche 1 bis 3, **dadurch gekennzeichnet, dass** das Lösungsmittel ein C₁-C₄-Alkohol oder ein C₃-C₅-Alkanon ist.

5. Verfahren nach einem der Ansprüche 1 bis 4, **dadurch gekennzeichnet, dass** das Lösungsmittel Methanol ist.

## Claims

1. Method for producing supported chromium catalysts for the polymerisation of olefins by loading a xerogel support with chromium by
a) adding to the xerogel support a volume of a 0.025 to 15 % by weight solution of a chromium compound or a volume of a solution comprising from 0.025 to 7.8 % by weight of Cr which is essentially converted into a chromium(VI) compound on heating in a water-free stream of gas under oxidizing conditions at temperatures in the range from 300 to 1100 °C for a period of from 10 to 1000 minutes in a solvent which comprises a maximum of 20 % by weight of water, and subsequently
b) evaporating the solvent,
**characterised in that** the volume of the chromium salt solution employed is less than 95 % of the pore volume of the xerogel support.

2. Method according to Claim 1, **characterised in that** the volume of the chromium salt solution is less than 90 % of the pore volume of the xerogel support.

3. Method according to Claim 2, **characterised in that** the volume of the chromium salt solution is from 75 to 85 % of the pore volume of the xerogel support.

4. Method according to one of Claims 1 to 3, **characterised in that** the solvent is a C₁-C₄-alcohol or a C₃-C₅-alkanone.

5. Method according to one of Claims 1 to 4, **characterised in that** the solvent is methanol.

## Revendications

1. Procédé de production de catalyseurs de chrome supportés pour la polymérisation d'oléfines par chargement d'un support de xérogel avec du chrome, au moyen
a) du mélange du support de xérogel avec un volume d'une solution de 0,025% à 15% en poids d'un composé du chrome ou avec un volume d'une solution de 0,025% à 7,8% en poids contenant du chrome qui, lors d'un chauffage dans un courant gazeux anhydre, dans des conditions oxydantes, à des températures de 300°C à 1100°C, pendant une durée de 10 à 1000 min, est essentiellement convertie en un composé du chrome(VI), dans un solvant contenant au maximum 20% en poids d'eau, puis
b) de l'évaporation du solvant,
**caractérisé en ce que** le volume de la solution de sel de chrome mise en oeuvre est inférieur à 95% du volume des pores du support de xérogel.

2. Procédé selon la revendication 1, **caractérisé en ce que** le volume de la solution de sel de chrome est inférieur à 90% du volume des pores du support de xérogel.

3. Procédé selon la revendication 2, **caractérisé en ce que** le volume de la solution de sel de chrome représente 75% à 85% du volume des pores du support de xérogel.

4. Procédé selon l'une quelconque des revendications 1 à 3, **caractérisé en ce que** le solvant est un alcool en C₁ à C₄ ou une alcanone en C₃ à C₅.

5. Procédé selon l'une quelconque des revendications 1 à 4, **caractérisé en ce que** le solvant est le méthanol.
